# EUROPEAN PATENT APPLICATION

(11) **EP 4 746 232 A1**
(43) Date of publication of application: **20.05.2026**
(21) Application number: 23949565.8
(22) Date of filing: 10.11.2023
(51) Int. Cl.: H02J 3/38, H02J 3/32, H02J 13/00

(54) **WIRED PARALLEL OPERATION METHOD APPLIED TO GRID CONNECTION AND GRID DISCONNECTION OF ENERGY STORAGE SYSTEM**

(30) Priority: 21.08.2023 CN 202311050323
(71) Applicant: Dyness Digital Energy Technology Co., Ltd., Suzhou, Jiangsu 215000 (CN)
(72) Inventor: XUE, Zhenyu, Suzhou, Jiangsu 215000 (CN); XU, Yao, Suzhou, Jiangsu 215000 (CN); LIU, Wei, Suzhou, Jiangsu 215000 (CN); LIU, Yang, Suzhou, Jiangsu 215000 (CN)
(74) Representative: Chung, Hoi Kan
(86) International application number: PCT/CN2023/131023
(87) International publication number: WO 2025/039386

(57) **Abstract**

Disclosed is a wired parallel operation method applicable to grid connection and grid disconnection of an energy storage system. The energy storage system includes a plurality of inverters, a communication module, an electric meter and a load. The method includes: each inverter determines whether the inverter itself is a master inverter or a slave inverter according to the communication state with the electric meter; the master inverter sends a synchronization signal to each slave inverter, such that the switching frequency and the working mode of each slave inverter are synchronized with that of the master inverter; the master inverter communicates with the electric meter to acquire load power consumption information and outputs same to the communication module; and the communication module communicates with the master inverter and the slave inverters to acquire battery information, and adjusts the battery charge and discharge power according to the load power consumption information and the battery information. The present application ensures a reasonable distribution of power among inverters, thus avoiding the phenomenon of high-frequency circulating currents.

## Description

### FIELD OF THE INVENTION

The present disclosure relates to the technical field of energy storage, and in particular, to a wired parallel operation method applicable to grid connection and grid disconnection of an energy storage system.

### BACKGROUND

With the application of energy storage technologies, more and more household-type, industrial and commercial-type, and ground power station-type energy storage inverters have been installed in terminals for use. The household-type inverter has power generally less than 20 kilowatts, and has advantages of convenient installation and moderate power, and is relatively suitable for being applied to places such as a home, a communication base station, and a small data center. The industrial and commercial-type energy storage inverter has power ranging from 50 kilowatts to several hundred kilowatts, and is mainly applied to places such as a factory or an office building. Because a single household energy storage inverter has limited power, and there is an increasing requirement for power supply power in various places, a capacity is usually expanded by using two or more energy storage inverters in parallel, to increase the power supply power. In addition, using the two or more energy storage inverters in parallel can further improve the reliability of the entire system and improve the redundancy capability.

However, in an existing process in which a plurality of inverters are used in parallel, there are the following two problems: In one aspect, when a system is in a grid-connected state, because each inverter independently controls power fed back to a power grid, power allocation between the inverters is usually relatively balanced. However, when the system is in an off-grid state, because there is only one load, and the energy storage system lacks a function of performing power allocation and control between the inverters, the output power of the inverters is unstable, and consequently, the system oscillates, such that the entire energy storage system cannot work stably. In another aspect, because carriers of inverters are not synchronized, high-frequency circulating currents occur, which may cause related components of a filter circuit in the inverter to endure prolonged high current stress and eventually fail. However, currently, to resolve the problem of high-frequency circulating currents, one method is to add a power frequency isolation transformer to an output end of each inverter, such that the output ends of the power frequency isolation transformers are connected in parallel to implement parallel connection. However, a relatively large power frequency transformer not only increases the volume and weight, but also increases costs of the entire system. Another method is to add a suppression inductor to an output end of each inverter. However, this method cannot resolve the problems of power allocation and power-frequency circulating currents between the inverters, and also increases the volume and occupied space of the system. Yet another method is to use a voltage amplitude-frequency droop characteristic control in a control algorithm, to implement balanced allocation of active power and reactive power of the inverters by adjusting the phases and amplitudes of output voltages of the inverters. However, this method still cannot effectively resolve the problem of high-frequency circulating currents caused by inconsistent carriers.

### SUMMARY OF THE INVENTION

To ensure proper power allocation between a plurality of inverters and avoid high-frequency circulating currents when the inverters of an energy storage system are used in parallel, the present application provides a wired parallel operation method applied to grid connection and grid disconnection of energy storage system. The present application provides a wired parallel operation method applicable to grid connection and grid disconnection of an energy storage system. The following technical solutions are adopted: The energy storage system includes a plurality of inverters, a communication module, an electricity meter, and a load; the plurality of inverters are connected in parallel, and each inverter is connected to the communication module; each inverter is connected to a corresponding battery; the electricity meter is communicatively connected to one of the inverters; the electricity meter is connected to the load; and the wired parallel connection method includes the following steps:
S100, powering on the energy storage system, and determining, by each inverter, based on a communication state with the electricity meter, whether the inverter is a master inverter or a slave inverter;
S200, communicating, by the master inverter, with each slave inverter using the communication module, to obtain state information of each slave inverter, and sending a carrier synchronization signal and a state synchronization signal to each slave inverter;
S300, performing, by each slave inverter, carrier synchronization based on the carrier synchronization signal, to implement switching frequency synchronization with the master inverter; and performing, by each slave inverter, self-test based on the state synchronization signal, to implement working mode synchronization with the master inverter;
S400, communicating, by the master inverter, with the electricity meter to obtain load electricity consumption information, and outputting the load electricity consumption information to the communication module;
S500, communicating, by the communication module, with the master inverter and each of the slave inverters separately to obtain battery information separately corresponding to the master inverter and the slave inverters, where the battery information includes states of charge and discharge of the battery and a battery SOC; and
S600, allocating, by the communication module, charging power and discharging power of the batteries based on the load electricity consumption information and the battery information, and sending, based on an allocation result, a scheduling instruction to the master inverter and/or the slave inverters, such that the master inverter and/or the slave inverters control adjustment of the charging power and the discharging power of the corresponding batteries based on the scheduling instruction.

By adopting the above technical solutions, the master inverter sends the carrier synchronization signal and the state synchronization signal to each slave inverter, to implement synchronization between the slave inverter and the master inverter, thereby resolving the problems of high-frequency circulating currents and power-frequency circulating currents that occur when a plurality of inverters are connected in parallel, and prolonging the service life of the inverters. In addition, according to the method in the present application, when the plurality of inverters are used in parallel, there is no need to manually set and select a master inverter on a screen, and the inverters can automatically identify and determine the master inverter and the slave inverters. Then, centralized monitoring on the plurality of inverters and power allocation and scheduling on the batteries are implemented by using the communication module, such that charging power and discharging power allocation between the inverters is reasonable, thereby ensuring stable operation of the energy storage system in both a grid-connected state and an off-grid state. Moreover, when the capacity of the energy storage system is expanded, carrier synchronization and state synchronization can be implemented on the capacity-expanded inverters by using the master inverter in a same manner, and management on the capacity-expanded inverters and reasonable power allocation on the capacity-expanded batteries are implemented by using the communication module, thereby facilitating rapid capacity expansion of the energy storage system, ensuring stable operation of the energy storage system after capacity expansion, and avoiding high-frequency circulating currents and power-frequency circulating currents.

In a specific implementable solution, before the step S200, the method further includes the following steps:
communicating, by the master inverter, with each slave inverter using the communication module, to obtain a data packet sent by each slave inverter;
determining, by the master inverter, based on the data packet, an operating status of each slave inverter; and
sending, by the master inverter, based on the operating status of each slave inverter, a stop instruction or a wait instruction to each slave inverter, such that each slave inverter actively disconnects from the energy storage system or enters a wait mode.

According to the above technical solutions, the slave inverter that operates abnormally is controlled to disconnect from the system in a timely manner, thereby avoiding impact on communications between the master inverter and other slave inverters in the energy storage system. This improves the stability of the system.

In a specific implementable solution, the step S600 specifically comprises:
if the batteries are in the state of discharge and the battery SOCs are inconsistent, allocating, by the communication module, based on the load electricity consumption information, the discharging power of the batteries, and sending, based on an allocation result, a discharging power increase instruction to the master inverter and/or the slave inverter corresponding to a battery with a large SOC, to increase discharging power of the battery with the large SOC, or sending a discharging power decrease instruction to the master inverter and/or the slave inverter corresponding to a battery with a small SOC, to decrease discharging power of the battery with the small SOC.

By adopting the above technical solutions, when the batteries are in the state of discharge and the battery SOCs are inconsistent, the communication module reallocates the discharging power of the batteries. By increasing discharging power of a battery with a large SOC and decreasing discharging power of a battery with a small SOC, the battery SOCs finally tend to be consistent, thereby ensuring the stable operation of the system.

In a specific implementable solution, the step S600 specifically further includes:
if the batteries are in the state of charge and the battery SOCs are inconsistent, allocating, by the communication module, based on the load electricity consumption information, the charging power of the batteries, and sending, based on an allocation result, a charging power decrease instruction to the master inverter and/or the slave inverter corresponding to a battery with a large SOC, to decrease charging power of the battery with the large SOC, or sending a charging power increase instruction to the master inverter and/or the slave inverter corresponding to a battery with a small SOC, to increase charging power of the battery with the small SOC.

By adopting the above technical solutions, when the batteries are in the state of charge and the battery SOCs are inconsistent, the communication module reallocates the charging power of the batteries. By decreasing charging power of a battery with a large SOC and increasing charging power of a battery with a small SOC, the battery SOCs finally tend to be consistent, thereby ensuring the stable operation of the system.

In a specific implementable solution, the step S600 specifically further includes:
if the batteries are in the state of discharge and the battery SOCs are consistent, allocating, by the communication module, based on the load electricity consumption information, the discharging power of the batteries, and sending, based on an allocation result, a discharging power consistency instruction to the master inverter and the slave inverters, to enable the discharging power of the batteries to be consistent.

By adopting the above technical solutions, when the batteries are in the state of discharge and the battery SOCs are consistent, the communication module reallocates the discharging power of the batteries, such that the discharging power of all the batteries is consistent, thereby ensuring the stable operation of the system.

In a specific implementable solution, the step S600 specifically further includes:
if the batteries are in the state of charge and the battery SOCs are consistent, allocating, by the communication module, based on the load electricity consumption information, the charging power of the batteries, and sending, based on an allocation result, a charging power consistency instruction to the master inverter and the slave inverters, to enable the charging power of the batteries to be consistent.

By adopting the above technical solutions, when the batteries are in the state of charge and the battery SOCs are consistent, the communication module reallocates the charging power of the batteries, such that the charging power of all the batteries is consistent, thereby ensuring the stable operation of the system.

In a specific implementable solution, the master inverter sends the carrier synchronization signal to each slave inverter at a zero-crossing point of a power grid signal;
performing, by each slave inverter, the carrier synchronization based on the carrier synchronization signal, to implement the switching frequency synchronization with the master inverter is specifically as follows: performing, by each slave inverter, based on the carrier synchronization signal, the carrier synchronization at the zero-crossing point of the power grid signal, to implement the switching frequency synchronization with the master inverter.

By adopting the above technical solutions, the anti-interference capability of the signal is improved, misjudgment of the slave inverters caused by an error in signal transmission is avoided, and it is ensured that the slave inverters can accurately identify the carrier synchronization signal.

In a specific implementable solution, performing, by each slave inverter, the self-test based on the state synchronization signal, to implement the working mode synchronization with the master inverter is specifically as follows:
determining, by each slave inverter, based on the state synchronization signal, a quantity of rising edges or falling edges in the state synchronization signal, and obtaining, based on the quantity of the rising edges or the falling edges, a working mode corresponding to the state synchronization signal; and performing adjustment, by each slave inverter, based on the working mode, to implement the working mode synchronization with the master inverter, where the working mode corresponding to the state synchronization signal represents a working mode of the master inverter.

By adopting the above technical solutions, the quantity of the rising edges or the falling edges in the state synchronization signal is determined to distinguish between working modes corresponding to the state synchronization signal, thereby improving the reliability of signal transmission.

In a specific implementable solution, the energy storage system further includes isolation chips, and the inverters are connected to the communication module through the isolation chips; and
each isolation chip is configured to implement electrical isolation between the corresponding inverter and the communication module.

By adopting the above technical solutions, the isolation chips implement electrical isolation between the inverters and the communication module, thereby improving the safety of the energy storage system.

In a specific implementable solution, the working mode of the master inverter includes: one or more of a grid-connected mode, a bypass mode, a grid-connected-to-off-grid mode, an off-grid-to-grid-connected mode, an off-grid startup mode, a fault mode, a wait mode, and a burning mode.

In summary, the technical solutions of the present application at least include the following beneficial technical effects.
1. In the wired parallel connection method according to the present application, the master inverter sends the carrier synchronization signal and the state synchronization signal to each slave inverter, to implement the synchronization between the slave inverter and the master inverter, thereby resolving high-frequency circulating currents and power-frequency circulating currents that occur when a plurality of inverters are connected in parallel, and prolonging the service life of the inverters.
2. In the wired parallel connection method according to the present application, when a plurality of inverters are used in parallel, there is no need to manually set and select a master inverter on a screen, and the inverters can automatically identify and determine the master inverter and the slave inverters. Then, centralized monitoring on the plurality of inverters and power allocation and scheduling on the batteries are implemented by using the communication module, such that charging power and discharging power allocation between the inverters is reasonable, thereby ensuring stable operation of the energy storage system in both a grid-connected state and an off-grid state.
3. In the wired parallel connection method according to the present application, when the capacity of the energy storage system is expanded, carrier synchronization and state synchronization can be implemented on the capacity-expanded inverters by using the master inverter in a same manner, and management on the capacity-expanded inverters and reasonable power allocation on the capacity-expanded batteries are implemented by using the communication module, thereby facilitating rapid capacity expansion of the energy storage system, ensuring stable operation of the energy storage system after capacity expansion, and avoiding high-frequency circulating currents and power-frequency circulating currents.

### BRIEF DESCRIPTION OF THE DRAWINGS

FIG. 1 is a main flowchart of a wired parallel connection method according to an embodiment of the present application;
FIG. 2 is a schematic diagram of adding transformers to output ends of inverters in the prior art;
FIG. 3 is a schematic diagram of adding suppression inductors to output ends of inverters in the prior art;
FIG. 4 is a schematic diagram of an overall structure of an energy storage system according to an embodiment of the present application;
FIG. 5 is a waveform diagram of a carrier synchronization signal and a power grid signal according to an embodiment of the present application; and
FIG. 6 is a timing diagram of working modes corresponding to a state synchronization signal according to an embodiment of the present application.

### DETAILED DESCRIPTION OF THE PREFERRED EMBODIMENTS

To make the objectives, technical solutions, and advantages of the present application clearer, embodiments of the present application are further described in detail below with reference to the accompanying drawings.

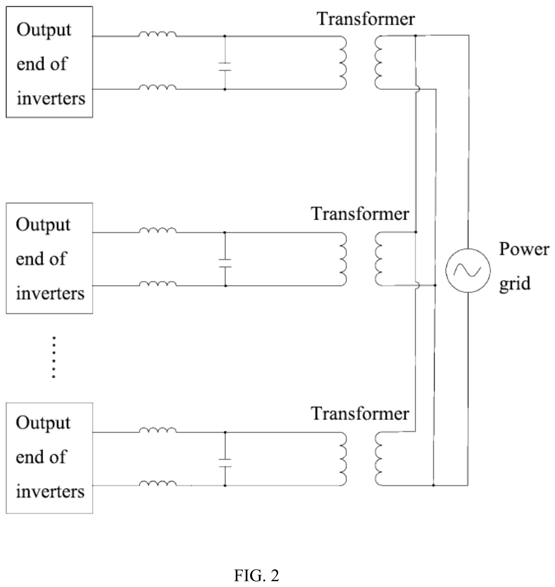

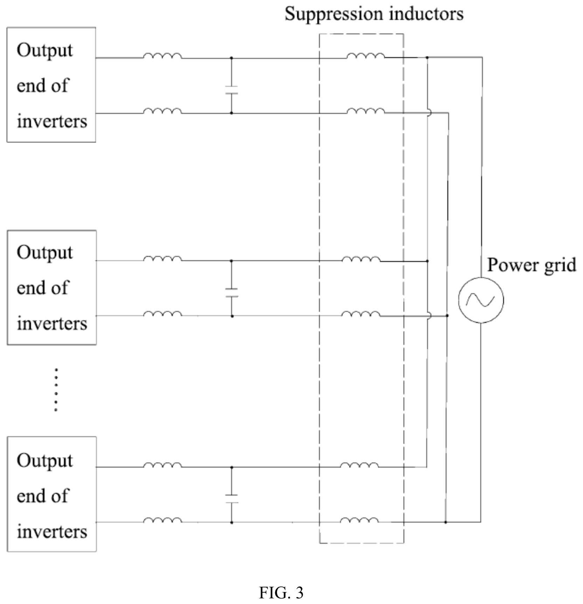

Referring to FIGs. 2 and 3, FIG. 2 is a schematic diagram of adding transformers to output ends of inverters to resolve the problem of high-frequency circulating currents in the prior art. However, in this manner, the volume and weight of the system are increased, and costs are increased. FIG. 3 is a schematic diagram of adding suppression inductors to output ends of inverters to resolve the problem of high-frequency circulating currents in the prior art. However, in this manner, in one aspect, the volume and space of the system are increased, and in another aspect, the problems of power allocation and power-frequency circulating currents between the inverters cannot be resolved.

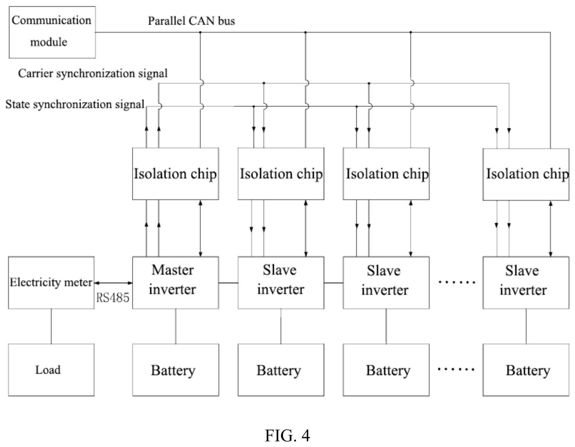

Therefore, disclosed in the present application is a wired parallel operation method applied to grid connection and grid disconnection of energy storage system. Referring to FIG. 4, the energy storage system includes a plurality of inverters, a communication module, an electricity meter, and a load. The plurality of inverters are connected in parallel, and each inverter is connected to the communication module; each inverter is connected to a corresponding battery; and the electricity meter is communicatively connected to one of the inverters, and the electricity meter is connected to the load.

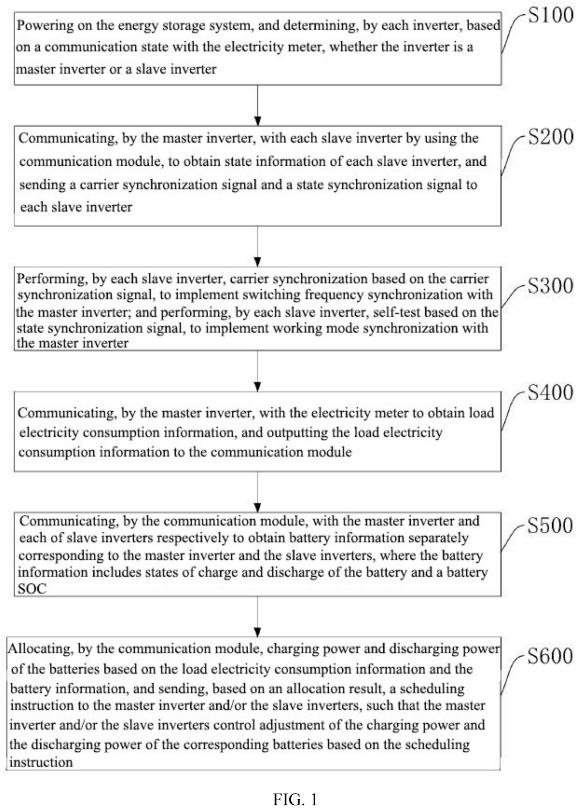

Further, each inverter may be communicatively connected to the corresponding battery in a CAN manner, each inverter may be communicatively connected to the communication module in a CAN manner, and the electricity meter may be communicatively connected to the inverter in an RS485 manner. Referring to FIG. 1, the wired parallel connection method includes the following steps:
S100, powering on the energy storage system, and determining, by each inverter, based on a communication state with the electricity meter, whether the inverter is a master inverter or slave inverters;
Specifically, an inverter that successfully communicates with the electricity meter is determined to be the master inverter, and an inverter that fails to communicate with the electricity meter is determined the slave inverter. There may be one master inverter, and there may be one or more slave inverters.

In S200, the master inverter communicates with each slave inverter by using the communication module, to obtain state information of each slave inverter, and sends a carrier synchronization signal and a state synchronization signal to each slave inverter.

Specifically, the master inverter may send the carrier synchronization signal and the state synchronization signal to each slave inverter by using an IO signal. The state information of the slave inverter may include a working mode of the slave inverter, and the working mode of the slave inverter may include: one or more of a grid-connected mode, a bypass mode, a grid-connected-to-off-grid mode, an off-grid-to-grid-connected mode, an off-grid startup mode, a fault mode, a wait mode, and a burning mode.

In S300, each slave inverter performs carrier synchronization based on the carrier synchronization signal, to implement switching frequency synchronization with the master inverter; and each slave inverter performs self-test based on the state synchronization signal, to implement working mode synchronization with the master inverter.

In the step, the master inverter and the slave inverters each have a transceiver circuit for the carrier synchronization signal and the state synchronization signal. When the master inverter sends a signal, the slave inverter receives the signal.

Specifically, during transmission of the carrier synchronization signal, to improve the anti-interference capability of the signal, misjudgment of the slave inverters caused by an error in signal transmission is avoided, and it is ensured that the slave inverters can identify the carrier synchronization signal. In the above step S200, the master inverter may send the carrier synchronization signal to each slave inverter at a zero-crossing point of a power grid signal. In the above step S300, when each slave inverter performs the carrier synchronization based on the carrier synchronization signal, to implement the switching frequency synchronization with the master inverter, the slave inverter may perform the carrier synchronization at the zero-crossing point of the power grid signal based on the carrier synchronization signal, to implement the switching frequency synchronization with the master inverter.

The energy storage system may be further connected to a public power grid. Specifically, the master inverter and the slave inverters obtain power grid signals by connecting to the public power grid.

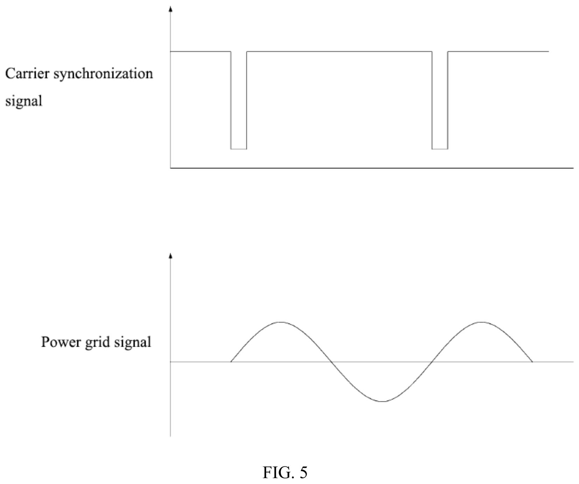

Referring to FIG. 5, the master inverter sends the carrier synchronization signal at the zero-crossing point of the power grid signal, and at the same time, after receiving the carrier synchronization signal, each slave inverter also performs the carrier synchronization operation at the zero-crossing point of the power grid signal. Further, the carrier synchronization signal includes a low level and a high level, and the low-level duration of the carrier synchronization signal may be set to be short to ensure that the carrier synchronization signal can be identified and has a strong anti-interference capability. Preferably, the low-level duration may be set to 2 µs. Specifically, during transmission of the state synchronization signal, to distinguish between working modes corresponding to the state synchronization signal and improve the reliability of signal transmission, each slave inverter may determine the quantity of rising edges or falling edges in the state synchronization signal based on the state synchronization signal sent by the master inverter, and obtain a working mode corresponding to the state synchronization signal based on the quantity of the rising edges or the falling edges. Each slave inverter performs adjustment based on the working mode, to implement the working mode synchronization with the master inverter. The working mode corresponding to the state synchronization signal represents a working mode of the master inverter.

In particular, each slave inverter may include a controller by which the quantity of the rising edges or the falling edges in the state synchronization signal is received and identified.

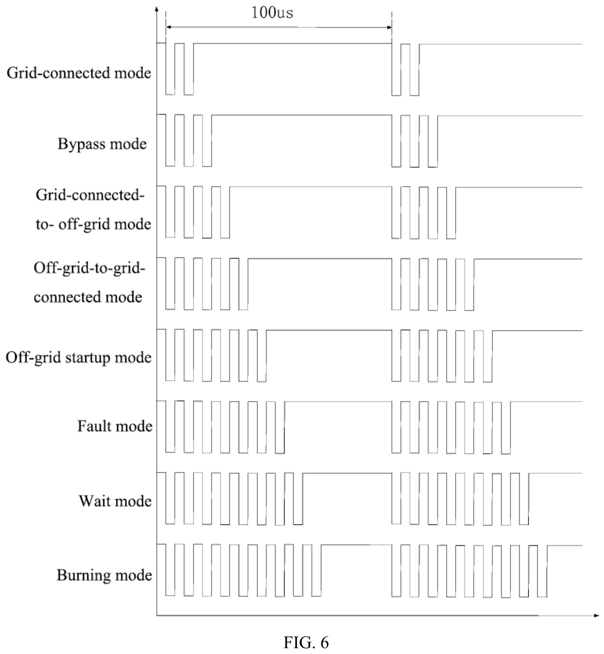

Referring to Table 1 and FIG. 6, shown is a manner of distinguishing between working modes by determining the quantity of falling edges in the state synchronization signal. The working mode of the master inverter may include: one or more of a grid-connected mode, a bypass mode, a grid-connected-to-off-grid mode, an off-grid-to-grid-connected mode, an off-grid startup mode, a fault mode, a wait mode, and a burning mode, or may include other modes. A person skilled in the art may design the working mode based on an actual situation. This is not limited in the present application. Table 1 shows a manner of the quantity of falling edges corresponding to one working mode and a meaning corresponding to each working mode. Certainly, a person skilled in the art may design the quantity of falling edges for different working modes, or distinguish between different quantities of rising edges for different working modes. This is not limited in the present application.

**Table 1. Different working modes, coding rules, and corresponding meanings**

| Working mode | Quantity of falling edges | Corresponding meaning |
|---|---|---|
| Grid-connected mode | 1 | Energy storage system enters grid-connected mode |
| Bypass mode | 2 | Energy storage system enters bypass mode |
| Grid-connected-to-off-grid mode | 3 | Energy storage system transitions from grid-connected mode to off-grid mode |
| Off-grid-to-grid-conn ected mode | 4 | Energy storage system transitions from off-grid mode to grid-connected mode |
| Off-grid startup mode | 5 | Energy storage system enters off-grid startup mode |
| Fault mode | 6 | Energy storage system enters fault mode |
| Wait mode | 7 | Energy storage system enters wait mode |
| Burning mode | 8 | Energy storage system enters firmware upgrade mode |

Referring to FIG. 6, FIG. 6 shows a waveform diagram corresponding to Table 1. A period for sending the state synchronization signal may be set to 100 µs, and a duration of one low-level pulse signal may be set to 4 µs. Each slave inverter determines a corresponding working mode based on the quantity of falling edges within one state synchronization signal period.

In S400, the master inverter communicates with the electricity meter to obtain load electricity consumption information, and outputs the load electricity consumption information to the communication module.

In S500, the communication module communicates with the master inverter and each of the slave inverters separately to obtain battery information separately corresponding to the master inverter and the slave inverters, where the battery information includes states of charge and discharge of the battery and a battery SOC (State of Charge).

Specifically, in step S500, the communication module may further obtain working modes of the master inverter and the slave inverters by communicating with the master inverter and the slave inverters, so as to determine whether the energy storage system is in the off-grid state or the grid-connected state. Exemplarily, when the working modes of the master inverter and the slave inverters are the grid-connected mode or the off-grid-to-grid-connected mode, it is determined that the energy storage system is in the grid-connected state; and when the working modes of the master inverter and the slave inverters are the off-grid startup mode or the grid-connected-to-off-grid mode, it is determined that the energy storage system is in the off-grid state.

In S600, the communication module allocates charging power and discharging power of the batteries based on the load electricity consumption information and the battery information, and sends a scheduling instruction to the master inverter and/or the slave inverters based on an allocation result, such that the master inverter and/or the slave inverters control adjustment of the charging power and the discharging power of the corresponding batteries based on the scheduling instruction. Specifically, the communication module may send a scheduling instruction to the master inverter based on an allocation result, such that the master inverter controls adjustment of the charging power and the discharging power of the corresponding batteries based on the scheduling instruction; or the communication module may send a scheduling instruction to the slave inverters, such that the slave inverters control adjustment of the charging power and the discharging power of the corresponding batteries based on the scheduling instruction; or the communication module may send a scheduling instruction to both the master inverter and the slave inverters, such that the master inverter and the slave inverters control adjustment of the charging power and the discharging power of the corresponding batteries based on the scheduling instruction. Therefore, the master inverter sends the carrier synchronization signal and the state synchronization signal to each slave inverter, to implement synchronization between the slave inverter and the master inverter, thereby resolving the problems of high-frequency circulating currents and power-frequency circulating currents that occur when a plurality of inverters are connected in parallel, and prolonging the service life of the inverters. In addition, in the wired parallel connection method according to the present application, when the plurality of inverters are used in parallel, there is no need to manually set and select a master inverter on a screen, and the inverters can automatically identify and determine the master inverter and the slave inverters. Then, centralized monitoring on the plurality of inverters and power allocation and scheduling on the batteries are implemented by using the communication module, such that the charging power and discharging power allocation between the inverters is reasonable, thereby ensuring stable operation of the energy storage system in both a grid-connected state and an off-grid state. Moreover, in the wired parallel connection method according to the present application, when the capacity of the energy storage system is expanded, carrier synchronization and state synchronization can be implemented on the capacity-expanded inverters by using the master inverter in a same manner, and management on the capacity-expanded inverters and reasonable power allocation on the capacity-expanded batteries are implemented by using the communication module, thereby facilitating rapid capacity expansion of the energy storage system, ensuring stable operation of the energy storage system after capacity expansion, and avoiding high-frequency circulating currents and power-frequency circulating currents. Specifically, the energy storage system in the present application can also adopt droop control as a control strategy. By implementing voltage amplitude-frequency droop characteristic control, balanced allocation of active power and reactive power of the energy storage system is implemented by adjusting the phases and amplitudes of output voltages of the master inverter and the slave inverters, further improving the stable operation of the energy storage system.

Further, the step S600 specifically includes the following steps.
if the batteries are in the state of discharge and the battery SOCs are inconsistent, allocating, by the communication module, based on the load electricity consumption information, the discharging power of the batteries, and sending, based on an allocation result, a discharging power increase instruction to the master inverter and/or the slave inverter corresponding to a battery with a large SOC, to increase discharging power of the battery with the large SOC, or sending a discharging power decrease instruction to the master inverter and/or the slave inverter corresponding to a battery with a small SOC, to decrease discharging power of the battery with the small SOC.

When a battery with a large SOC corresponds to the master inverter, the communication module sends a discharging power increase instruction to the master inverter corresponding to the battery with the large SOC; when a battery with a large SOC corresponds to a slave inverter, the communication module sends a discharging power increase instruction to the slave inverter corresponding to the battery with the large SOC; and when batteries with large SOCs correspond to both the master inverter and a slave inverter, the communication module sends a discharging power increase instruction to both the master inverter and the slave inverter corresponding to the batteries with the large SOCs. Similarly, the communication module sends a discharging power decrease instruction to the master inverter and/or a slave inverter corresponding to a battery with a small SOC, that is, the communication module sends a discharging power decrease instruction to the master inverter corresponding to the battery with the small SOC, or sends a discharging power decrease instruction to the slave inverter corresponding to the battery with the small SOC, or sends a discharging power decrease instruction to both the master inverter and the slave inverter corresponding to the batteries with small SOCs.

Therefore, when the batteries are in the state of discharge and the battery SOCs are inconsistent, the communication module reallocates the discharging power of the batteries. By increasing discharging power of a battery with a large SOC and decreasing discharging power of a battery with a small SOC, the battery SOCs finally tend to be consistent, thereby ensuring the stable operation of the system.
if the batteries are in the state of charge and the battery SOCs are inconsistent, allocating, by the communication module, based on the load electricity consumption information, the charging power of the batteries, and sending, based on an allocation result, a charging power decrease instruction to the master inverter and/or the slave inverter corresponding to a battery with a large SOC, to decrease charging power of the battery with the large SOC, or sending a charging power increase instruction to the master inverter and/or the slave inverter corresponding to a battery with a small SOC, to increase charging power of the battery with the small SOC.

The communication module sends a charging power decrease instruction to the master inverter and/or a slave inverter corresponding to a battery with a large SOC, that is, the communication module sends a charging power decrease instruction to the master inverter corresponding to the battery with the large SOC, or sends a charging power decrease instruction to the slave inverter corresponding to the battery with the large SOC, or sends a charging power decrease instruction to both the master inverter and the slave inverter corresponding to the batteries with large SOCs. The communication module sends a charging power increase instruction to the master inverter and/or a slave inverter corresponding to a battery with a small SOC, that is, the communication module sends a charging power increase instruction to the master inverter corresponding to the battery with the small SOC, or sends a charging power increase instruction to the slave inverter corresponding to the battery with the small SOC, or sends a charging power increase instruction to both the master inverter and the slave inverter corresponding to the batteries with small SOCs.

Therefore, when the batteries are in the state of charge and the battery SOCs are inconsistent, the communication module reallocates the charging power of the batteries. By decreasing charging power of a battery with a large SOC and increasing charging power of a battery with a small SOC, the battery SOCs finally tend to be consistent, thereby ensuring the stable operation of the system.

If the batteries are in the state of discharge and the battery SOCs are consistent, the communication module allocates the discharging power of the batteries based on the load electricity consumption information, and sends a discharging power consistency instruction to the master inverter and the slave inverters based on an allocation result, to enable the discharging power of the batteries to be consistent.

Therefore, when the batteries are in the state of discharge and the battery SOCs are consistent, the communication module reallocates the discharging power of the batteries, such that the discharging power of all the batteries is consistent, thereby ensuring the stable operation of the system.

If the batteries are in the state of charge and the battery SOCs are consistent, the communication module allocates the charging power of the batteries based on the load electricity consumption information, and sends a charging power consistency instruction to the master inverter and the slave inverters based on an allocation result, to enable the charging power of the batteries to be consistent.

Therefore, when the batteries are in the state of charge and the battery SOCs are consistent, the communication module reallocates the charging power of the batteries, such that the charging power of all the batteries is consistent, thereby ensuring the stable operation of the system.

According to the above steps, regardless of whether the energy storage system is in the grid-connected state or the off-grid state, the communication module allocates and adjusts the charging power and the discharging power of the batteries based on the load electricity consumption information on the premise of ensuring a load electricity consumption requirement. When the battery SOCs are inconsistent, a battery with a large SOC is controlled to increase discharging power or decrease charging power, and a battery with a small SOC is controlled to decrease discharging power or increase charging power, such that the battery SOCs finally tend to be consistent, and a balance state is achieved, thereby ensuring stable operation of the energy storage system.

For example, an average value-based determination manner may be used to determine a battery with a large SOC and a battery with a small SOC: The communication module obtains the sum of SOCs of all the batteries and the quantity of the batteries based on battery information separately corresponding to the master inverter and the slave inverters, so as to obtain an average SOC value of the batteries. In this case, a battery whose SOC is higher than the average SOC value may be determined as a battery with a large SOC, and a battery whose SOC is lower than the average SOC value may be determined as a battery with a small SOC. For example, a threshold-based determination manner may also be used: An SOC threshold is preset in the communication module, a battery whose SOC is higher than the SOC threshold is determined as a battery with a large SOC, and a battery whose SOC is lower than the SOC threshold is determined as a battery with a small SOC. A person skilled in the art may design the determination conditions for a battery with a large SOC and a battery with a small SOC. This is not limited in the present application.

Specifically, the energy storage system may further include a photovoltaic panel configured for power generation, and the energy storage system may be further connected to a public power grid to implement energy interaction with the public power grid. Specifically, the master inverter and the slave inverters are connected to the public power grid. When the master inverter and the slave inverters are in a grid-connected mode or an off-grid-to-grid-connected mode, the energy storage system is in a grid-connected state: if the batteries are in the state of charge, an electric energy source for charging the batteries in this case may be the photovoltaic panel, or may be the public power grid, or the photovoltaic panel and the public power grid charge the batteries at the same time; or if the batteries are in the state of discharge, electric energy discharged by the batteries in this case may be used by the load, or may be transmitted to the public power grid to perform energy interaction with the public power grid, or may be used by the load and transmitted to the public power grid at the same time.

When the master inverter and the slave inverters are in an off-grid startup mode or an grid-connected-to-off-grid mode, the energy storage system is in an off-grid state: if the batteries are in the state of charge, an electric energy source for charging the batteries in this case may be the photovoltaic panel; or if the batteries are in the state of discharge, electric energy discharged by the batteries in this case may be used by the load.

Further, referring to FIG. 4, the energy storage system further includes isolation chips, and the inverters are connected to the communication module through the isolation chips. Each isolation chip is configured to implement electrical isolation between the corresponding inverter and the communication module, thereby improving the safety of the energy storage system.

Further, before the step S200, the method further includes the following steps:
communicating, by the master inverter, with each slave inverter by using the communication module, to obtain a data packet sent by each slave inverter;
determining, by the master inverter, based on the data packet, an operating status of each slave inverter; and
sending, by the master inverter, based on the operating status of each slave inverter, a stop instruction or a wait instruction to each slave inverter, such that each slave inverter actively disconnects from the energy storage system or enters a wait mode.

In the step, the operating status of each slave inverter includes normal operation and abnormal operation. Specifically, the master inverter sends a stop instruction to a slave inverter that operates abnormally, such that the slave inverter that operates abnormally actively disconnects from the energy storage system; and the master inverter sends a wait instruction to a slave inverter that operates normally, such that the slave inverter that is not lost and operates normally enters a wait mode.

Further, the master inverter can further determine whether there is a lost slave inverter based on the data packet, and mark the lost slave inverter. If the lost slave inverter cannot normally communicate with the master inverter, the master inverter does not send a stop instruction or a wait instruction to the lost slave inverter.

Specifically, when the master inverter determines whether there is a lost slave inverter, the following manner may be used: When the master inverter cannot obtain a data packet sent by a slave inverter, it can be considered that the slave inverter is lost. When the master inverter determines whether the slave inverter operates normally, the following manner may be used: The master inverter determines, based on content of a data packet sent by each slave inverter, whether the slave inverter operates normally. Further, the data packet may include: BMS (Battery Management System) data, and further, the BMS data is related data of a battery management system connected to the slave inverter; the data packet may further include operation data of the slave inverter, and further, the operation data of the slave inverter may include device information and operation information of the inverter, voltage information of the battery, current information of the battery, temperature information of the battery, internal fault information of the slave inverter, off-grid data, and the like; and the data packet may further include alarm information, and further, the alarm information may include alarm information inside the slave inverter and alarm information of other devices connected to the slave inverter.

Therefore, the slave inverter that operates abnormally is controlled to disconnect from the system in a timely manner, thereby avoiding impact on communications between the master inverter and other slave inverters in the energy storage system. This improves the stability of the system.

The above embodiments are merely preferred embodiments of the present application, and are not intended to limit the scope of protection of the present application. Therefore, any equivalent changes made based on the structures, shapes, and principles of the present application shall all fall within the scope of protection of the present application.

## Claims

1. A wired parallel operation method applicable to grid connection and grid disconnection of an energy storage system, wherein the energy storage system comprises a plurality of inverters, a communication module, an electricity meter, and a load; the plurality of inverters are connected in parallel, and each inverter is connected to the communication module; each inverter is connected to a battery; the electricity meter is communicatively connected to a master inverter in the plurality of inverters; the electricity meter is connected to the load; and the wired parallel connection method comprises the steps of:
S100, powering on the energy storage system, and determining, by each inverter, based on a communication state with the electricity meter, whether the inverter is a master inverter or a slave inverter, wherein an inverter that successfully communicates with the electricity meter is determined to be the master inverter, and an inverter that fails to communicate with the electricity meter is determined to be the slave inverter;
S200, communicating, by the master inverter, with each slave inverter using the communication module, to obtain state information of each slave inverter, and sending a carrier synchronization signal and a state synchronization signal to each slave inverter;
S300, performing, by each slave inverter, carrier synchronization based on the carrier synchronization signal, to implement switching frequency synchronization with the master inverter; and performing, by each slave inverter, self-test based on the state synchronization signal, to implement working mode synchronization with the master inverter;
S400, communicating, by the master inverter, with the electricity meter to obtain load electricity consumption information, and outputting the load electricity consumption information to the communication module;
S500, communicating, by the communication module, with the master inverter and each of slave inverters respectively to obtain battery information separately corresponding to the master inverter and the slave inverters, where the battery information includes states of charge and discharge of the battery and a battery SOC; and
S600, allocating, by the communication module, charging power and discharging power of the batteries based on the load electricity consumption information and the battery information, and sending, based on an allocation result, a scheduling instruction to the master inverter and/or the slave inverters, such that the master inverter and/or the slave inverters control adjustment of the charging power and the discharging power of the corresponding batteries based on the scheduling instruction; and
wherein the step of performing, by each slave inverter, the self-test based on the state synchronization signal, to implement the working mode synchronization with the master inverter comprises:
determining, by each slave inverter, based on the state synchronization signal, a quantity of rising edges or falling edges in the state synchronization signal, and obtaining, based on the quantity of the rising edges or the falling edges, a working mode corresponding to the state synchronization signal; and performing adjustment, by each slave inverter, based on the working mode, to implement the working mode synchronization with the master inverter, wherein the working mode corresponding to the state synchronization signal represents a working mode of the master inverter.

2. The wired parallel operation method applied to grid connection and grid disconnection of energy storage system according to claim 1, wherein before the step S200, the method further comprises steps of:
communicating, by the master inverter, with each slave inverter by using the communication module, to obtain a data packet sent by each slave inverter;
determining, by the master inverter, based on the data packet, an operating status of each slave inverter; and
sending, by the master inverter, based on the operating status of each slave inverter, a stop instruction or a wait instruction to each slave inverter, such that each slave inverter actively disconnects from the energy storage system or enters a wait mode.

3. The wired parallel operation method applied to grid connection and grid disconnection of energy storage system according to claim 1, wherein the step S600 specifically comprises:
if the batteries are in the state of discharge and the battery SOCs are inconsistent, allocating, by the communication module, based on the load electricity consumption information, the discharging power of the batteries, and sending, based on an allocation result, a discharging power increase instruction to the master inverter and/or the slave inverter corresponding to a battery with a large SOC, to increase discharging power of the battery with the large SOC, or sending a discharging power decrease instruction to the master inverter and/or the slave inverter corresponding to a battery with a small SOC, to decrease discharging power of the battery with the small SOC.

4. The wired parallel operation method applied to grid connection and grid disconnection of energy storage system according to claim 1, wherein the step S600 specifically further comprises:
if batteries are in a state of charge and the battery SOCs are inconsistent, allocating, by the communication module, based on the load electricity consumption information, the charging power of the batteries, and sending, based on an allocation result, a charging power decrease instruction to the master inverter and/or the slave inverter corresponding to a battery with a large SOC, to decrease charging power of the battery with the large SOC, or sending a charging power increase instruction to the master inverter and/or the slave inverter corresponding to a battery with a small SOC, to increase charging power of the battery with the small SOC.

5. The wired parallel operation method applied to grid connection and grid disconnection of energy storage system according to claim 1, wherein the step S600 specifically further comprises:
if the batteries are in the state of discharge and the battery SOCs are consistent, allocating, by the communication module, based on the load electricity consumption information, the discharging power of the batteries, and sending, based on an allocation result, a discharging power consistency instruction to the master inverter and the slave inverters, to enable the discharging power of the batteries to be consistent.

6. The wired parallel operation method applied to grid connection and grid disconnection of energy storage system according to claim 1, wherein the step S600 specifically further comprises:
if the batteries are in the state of charge and the battery SOCs are consistent, allocating, by the communication module, based on the load electricity consumption information, the charging power of the batteries, and sending, based on an allocation result, a charging power consistency instruction to the master inverter and the slave inverters, to enable the charging power of the batteries to be consistent.

7. The wired parallel operation method applied to grid connection and grid disconnection of energy storage system according to claim 1, wherein
the master inverter sends the carrier synchronization signal to each slave inverter at a zero-crossing point of a power grid signal; and
performing, by each slave inverter, the carrier synchronization based on the carrier synchronization signal, to implement the switching frequency synchronization with the master inverter specifically comprises: performing, by each slave inverter, based on the carrier synchronization signal, the carrier synchronization at the zero-crossing point of the power grid signal, to implement the switching frequency synchronization with the master inverter.

8. The wired parallel operation method applied to grid connection and grid disconnection of energy storage system according to claim 1, wherein the energy storage system further comprises isolation chips, and the inverters are connected to the communication module through the isolation chips; and
each isolation chip is configured to implement electrical isolation between the inverter and the communication module.

9. The wired parallel operation method applied to grid connection and grid disconnection of energy storage system according to claim 7, wherein the working mode of the master inverter comprises: one or more of a grid-connected mode, a bypass mode, a grid-connected-to-off-grid mode, an off-grid-to-grid-connected mode, an off-grid startup mode, a fault mode, a wait mode, and a burning mode.
